# EUROPEAN PATENT APPLICATION

(11) **EP 1 385 107 A1**
(43) Date of publication of application: **28.01.2004**
(21) Application number: 02016630.2
(22) Date of filing: 25.07.2002
(51) Int. Cl.: G06F 17/60

(54) **Simplified method for controlling the propagation of metadata items**

(71) Applicant: DEUTSCHE THOMSON-BRANDT GMBH, 78048 Villingen-Schwenningen (DE)
(72) Inventor: Schiller, Harald, 30539 Hannover (DE); Adolph, Dirk, 30952 Ronnenberg (DE); Hörentrup, Jobst, 30161 Hannover (DE); Klausberger, Wolfgang, 30880 Laatzen (DE); Winter, Marco, 30173 Hannover (DE)
(74) Representative: Thies, Stephan

(57) **Abstract**

The present invention relates to propagation of metadata items 5 to recording media 1, 2 and/or to devices 3, 4 for reading from and/or writing to recording media.
It is an object of the invention to propose a simplified method for enabling and controlling automatic propagation of metadata items 5.

The method comprises the steps of:
providing the metadata items 5 with a propagation property 6, the propagation property 6 assuming a first or a second value,
automatically propagating copies of such metadata items 5, which have the first propagation property value, from a device 3, 4 to a recording medium 1, 2, and vice versa, if and only if they do not yet exist in the respective other
location 1, 2, 3, 4, at least when the recording medium 1, 2 is inserted into or removed from the device 3, 4, or when the device 3, 4 is powered up or down.

## Description

The present invention relates to a method for controlling the propagation of metadata items to recording media and/or to devices for reading from and/or writing to recording media, and to a device and a recording medium for performing the method.

The future of home entertainment will be characterised by two important developments. The first development is that an increasing amount of metadata items will be available. The metadata items will contain all kind of additional data related to multimedia objects, recording media and consumer electronic devices. The second development is that consumer electronic devices will increasingly be connected to networks allowing for communication and data exchange between the devices.

When dealing with metadata items in an environment of removable recording media and consumer electronic devices connected to a network, an important aspect is how the metadata items shall propagate between the involved devices and/or recording media. Known metadata schemes make no assumptions about metadata propagation. Their approach with respect to propagation of metadata is completely static. Any propagation of metadata items must be explicitly initiated by the user. However, it would be very efficient and user friendly if certain metadata items could be automatically propagated in a controlled way. A straightforward solution for this purpose is not available, since a propagation behaviour appropriate for one kind of metadata item might be inappropriate for a different kind of metadata item.

In the co-pending application EP 02012190.1 a method has been proposed where metadata items are provided with a propagation property, the propagation property defining to which recording media and/or to which devices for reading from and/or writing to recording media the metadata items shall propagate, and on which recording media and/or in which devices the metadata items shall be stored. The proposed method needs a plurality of different propagation properties for controlling the propagation. The method could be further improved by making it easier for a device to visualize and for a user to understand the effect the different propagation properties have on the permanent and non-permanent storage of metadata items on the recording media and in the devices.

It is, therefore, an object of the present invention to propose a simplified method for enabling and controlling automatic propagation of metadata items to recording media and to devices for reading from and/or writing to recording media avoiding the above problems.

A method according to the invention comprises the steps of: providing the metadata items with a propagation property, the propagation property assuming a first or a second value, automatically propagating copies of those metadata items which have the first propagation property value from a device to a recording medium, and vice versa, if and only if they do not yet exist in the respective other location, at least when the recording medium is inserted into or removed from the device, or when the device is powered up or down. Though the terms "inserted into" and "removed from" are used here, the invention is applicable to any form of contact between the recording medium and the device, which allows for data exchange, including contactless techniques. By using only two propagation property values a transparent propagation scheme is achieved, which can augment any given metadata scheme to allow for automatic metadata propagation. A metadata item will either propagate or not, no further distinction is necessary to which devices or recording media the metadata item shall propagate. The first and second propagation property value will henceforth be designated as "active" and "passive", respectively. The propagation property can, for example, be embodied as a flag. By restricting the automatic propagation to only those metadata items, which are not yet identically existent in the respective other location, it is guaranteed that the process of propagation will not supersede any existing propagation property. Whether or not an identical metadata item exists can be ascertained, for example, by comparing unique identifiers associated with the metadata items. The automatic propagation of a copy of the metadata items when a recording medium is inserted into a device, or when the device is powered up, guarantees that both the device as well as the recording medium are provided with all necessary metadata items before any further action is initiated. Automatically propagating the metadata items when the recording medium is removed from the device, or when the device is powered down, makes sure that the recording medium and the device are provided with the most recent metadata items, i.e. that no changes, which might have been made to the metadata items, are lost. In a more general approach, metadata items are automatically propagated when a transition occurs from one "device state" to another "device state", e.g. from "off" to "on" or from "recording medium loaded" to "no recording medium loaded" etc. Besides the above mentioned device states many other device states can be used.

Advantageously, the method further comprises the step of changing the propagation property of the propagated copies of the metadata items to the second propagation property value. By changing the propagation property to "passive" the process of propagation is not recursive and will stop after one duplication step. No further provisions are necessary to prevent unwanted spreading of a metadata item. A copy of an "active" metadata item will always be "passive".

Favourably, the method according to the invention further comprises the step of temporarily storing into a first memory of the device for reading from and/or writing to recording media all metadata items accessible in a second memory of the device or reduced versions of these metadata items when the device is powered up, and all metadata items accessible on a recording medium or reduced versions of these metadata items whenever such recording medium is inserted into the device, irrespective of their propagation property. In this way, during operation, all accessible metadata items or reduced versions thereof are stored in the first memory. The first memory, therefore, always contains the totality of metadata items or reduced versions thereof from the device and from all recording media inserted therein. The first memory actually emulates all inserted recording media and the second memory. This enables an easy manipulation, handling and re-classification of metadata items. Favourably, the first and the second memory are a volatile memory and a permanent memory, respectively. However, the first memory can also be realized as a permanent memory. Typically, metadata items stored in a volatile memory are accessible much faster than those stored in a permanent memory. If only reduced versions of the metadata items are stored in the volatile memory, they can be quickly accessed, whereas any access to those parts of a metadata item which is not contained in the reduced version necessitates an additional and potentially slower access to the full-size metadata item retained in the permanent memory. By appropriately specifying which parts of a metadata item shall be contained in the reduced version, the compromise between access speed and memory usage can be optimized for any given application. For example, information like "creation date", "author", "last access", etc. does not necessarily need to be stored in the volatile memory. In the following, any mentioning of "metadata item" shall always be understood to include the cases of reduced version of a metadata item as well as full-size metadata item.

According to another advantageous refinement of the invention, the method further comprises the step of retrieving additional metadata items from a network and at least temporally storing these metadata items in the device. In this way further helpful metadata items can be obtained from other devices of the network. The term "network" denotes any number of devices which are connected in a way that enables data exchange between the devices, including fixed wire and wireless connections.

Advantageously, the method further comprises the step of adding a location identifier to the metadata items upon storage, the location identifier indicating to which storage location the propagation property of a metadata item applies. In the first memory of the device several copies of a metadata item can exist coming from different locations and having different propagation properties. For example, an "active" metadata item from a first recording medium will be copied as a "passive" metadata item to the first memory of the device, i.e. having a propagation property "passive" and a location identifier "device". In addition, a further copy of the same metadata item will exist in the first memory having a propagation property "active" and a location identifier "medium 1". Other copies coming from further recording media might also be present. The metadata items stored in the first memory coming from different recording media must consistently be written back to the recording media they came from. At the same time the correct propagation property has to be preserved. By adding a location identifier to the metadata items upon storage, the above problems are easily solved.

Favourably, the method according to the invention further comprises the step of modifying the propagation properties of stored metadata items. This modifying of propagation properties can either be performed automatically or by user intervention. In this way further possibilities for managing the propagation behaviour of metadata items are provided.

According to the invention, the method further comprises the steps of writing back the metadata items in accordance with the propagation property and the location identifier from the first memory of the device to a recording medium at least when the recording medium is removed from the device, or from the first memory of the device into the second memory of the device at least when the device is powered down. When the above mentioned reduced versions of metadata items are being handled in memory, this writing back must be understood to encompass a step of referencing and outputting the full-size metadata items such that no parts of metadata items get lost when leaving the system. The step of writing back ensures that all metadata items are written to the location indicated by their location property, and that both, the recording medium and the device, are provided with the most recent metadata items in case changes have been made to the metadata items.

According to a further advantageous refinement of the invention, the method further comprises the step of sending metadata items stored in the device to a network. This allows to provide helpful metadata items to other devices or users in the network.

Favourably, the steps of writing metadata items back to the recording medium, of moving metadata items to the second memory, and/or of sending metadata items to the network comprise overwriting of the metadata items existing on the recording medium, in the second memory, and/or in the network. This ensures that outside the first memory every metadata item has a definite propagation property, which would not be the case if metadata items were merged. Only inside the first memory of the device the same metadata items, i.e. metadata items having an identical metadata body, may exist with different values for the propagation property. Therefore, the data structure of the metadata items must permit to hold more than one propagation property.

Advantageously, the method further comprises the step of providing the recording medium, the device for reading from and/or writing to recording media, and/or the metadata items with a protection property for preventing the propagation and/or alteration of metadata items. The propagation property is meant to be superseded by the protection property, i.e. any act of copying as demanded by the propagation property will be performed only as far as the protection property of the involved recording media, devices, and/or metadata items allows. This enables, for example, prevention of an undesired propagation of metadata items.

Favourably, the protection property either provides for a protection against export, against import, or against both export and import of the metadata items from/to the recording medium and/or the device for reading from and/or writing to recording media. In this way a user can decide and easily put into effect whether a device or a recording medium shall be protected from propagating metadata items to other recording media and/or devices, or from receiving metadata items from other recording media or devices, or both.

According to the invention, a device for reading from and/or writing to recording media comprises means for performing a method according to the invention. Such a device provides a user with a very efficient and user-friendly way of controlling metadata propagation.

Favourably, a recording medium comprises metadata items having a propagation property for performing a method according to the invention. Such a recording medium optimally supports the inventive method.

Advantageously, a data stream comprises metadata items having a propagation property for performing a method according to the invention. This data stream, for example, is optimally suitable for a network comprising a device according to the invention.

For a better understanding of the invention, exemplary embodiments are specified in the following description of advantageous configurations with reference to the figures. It is understood that the invention is not limited to these exemplary embodiments and that specified features can also expediently be combined and/or modified without departing from the scope of the present invention. In the figures:
- Fig. 1: shows a scheme of device state transitions;
- Fig. 2: shows a metadata item according to the invention;
- Fig. 3: shows a metadata item inside a volatile memory having more than one propagation property; and
- Fig. 4: shows a propagation scheme for "active" and "passive" metadata items using a volatile memory.

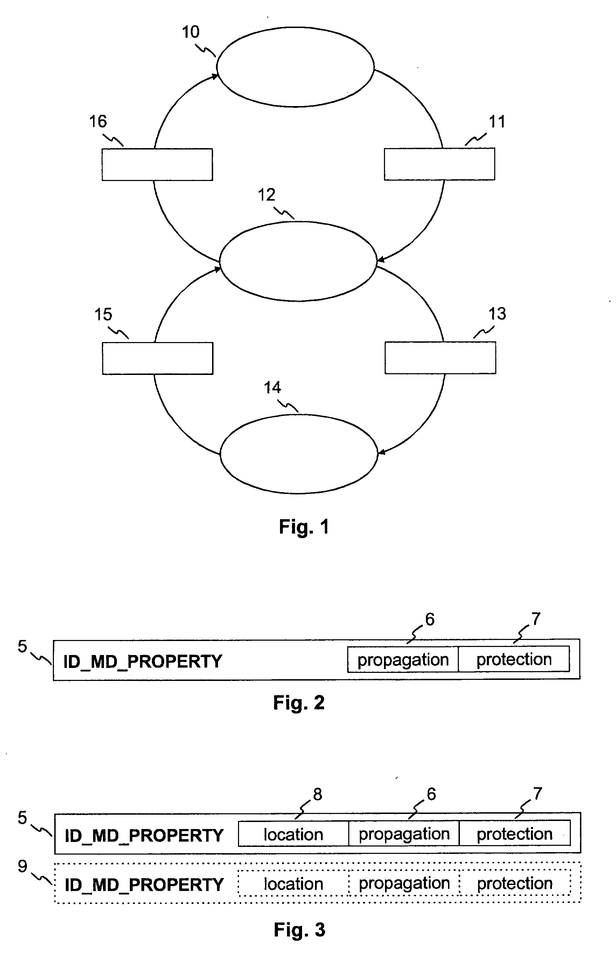

Fig. 1 shows the propagation of metadata items using a scheme of device state transitions. Depicted are three main states: A first state "power off" 10, a second state "power on, no recording medium recognized" 12, and a third state "power on, recording medium recognized" 14. It is assumed that the transition to the "power off" state 10 is always through the "power on, no recording medium recognized" state 12. The transition from the first state 10 to the second state 12 is through a "power up" step 11. Correspondingly, the transition between the second state 12 and the first state 10 is through a "power down" step 16.
A state transition from the second state 12 to the third state 14 occurs through a "recording medium welcome" step 13. The step 13 comprises at least two cases:
- recognition of a recording medium after it is inserted into the device or into one of a plurality of locations of the device; and
- recognition of a recording medium, physically already present in the device, after power up.
   Correspondingly, the transition between the third state 14 and the second state 12 occurs through a "recording medium farewell" step 15. As before, also the "recording medium farewell" step 15 comprises at least two cases:

- farewell of a recording medium prior to imminent removal of the recording medium from the device; and
- farewell of a recording medium, which physically remains in the device, prior to imminent power down.

Fig. 2 shows a metadata item 5 according to the invention as present on a recording medium 1, 2 or in the permanent memory 31, 41 of a device 3, 4 for reading from and/or writing to recording media. The metadata item 5 comprises a propagation property 6 and a protection property 7, but no location identifier. It is, of course, also possible to include a location identifier if needed.

Fig. 3 shows a metadata item 5 according to the invention as present in the volatile memory 32, 42 of a device 3, 4 for reading from and/or writing to recording media. Besides the propagation property 6 and the protection property 7, the metadata item 5 further comprises a location identifier 8. This allows to store several copies 5, 9 of the same metadata item, having different propagation properties 6 and location identifiers 8, together in the same volatile memory 32, 42. This can, for example, be realized by storing a single metadata item 5 with a table of propagation properties 6 and the respective location identifiers 8, or by storing individual metadata items 5, 9 each having a single propagation property 6 and location identifier 8. The first solution, however, is preferable, since changes to the content of a metadata item 5 need only be made once.

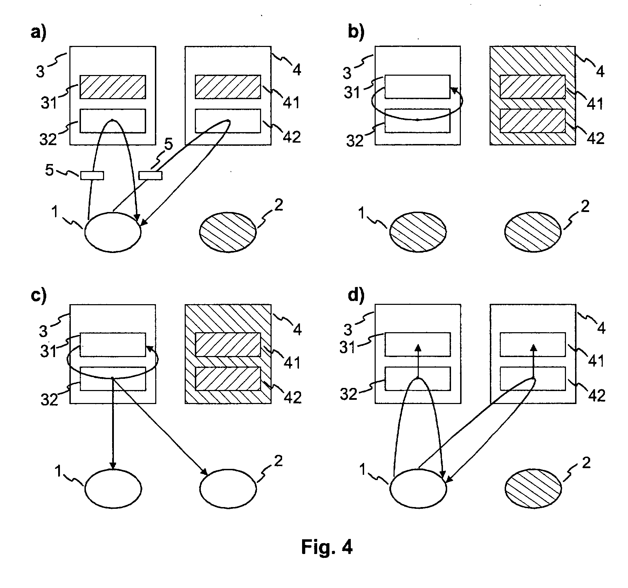

Fig. 4 shows a propagation scheme for "active" and "passive" metadata items 5 using a volatile memory. Depicted are a first and a second recording medium 1, 2 and a first and a second device 3, 4 for reading from and/or writing to recording media, each device 3, 4 comprising a permanent memory 31, 41 and a volatile memory 32, 42. Inactive parts of the devices 3, 4 and inactive recording media 1, 2 are hatched, inactive meaning that they do not take part in metadata propagation. While in Fig. 4a) also a metadata item 5 is shown, it has been omitted in Fig. 4b)-4d) for the sake of clarity.

In Fig. 4a), the handling of a "passive" metadata item 5 resident on the first recording medium 1 is shown. When the recording medium 1 is inserted into the device 3, 4, it is determined whether the metadata item 5 already exists in the volatile device memory 32, 42. If this is not the case, the "passive" metadata item 5 is copied as a "passive" copy to the volatile device memory 32, 42 with a location identifier "medium 1". Upon a "recording medium farewell" device state transition 15 the copy of the "passive" metadata item 5 is written back to the recording medium 1 and removed from the volatile memory 32, 42. In the device 3, 4 no copy of the metadata item remains, therefore the "passive" metadata item 5 cannot propagate to the second recording medium 2 either.

Fig. 4b) depicts the handling of a "passive" metadata item resident in the permanent memory 31 of the first device 3. Upon a "power up" state transition 11 the "passive" metadata item is copied as a "passive" copy from the permanent memory 31 to the volatile memory 32 with a location identifier "device 1". Upon a "power down" state transition 16 the metadata item is written back to the permanent memory 31 and removed from the volatile memory 32. No copy of the "passive" metadata item leaves the device 3, i.e. no copy is written to the recording medium 1, 2.

Fig. 4c) shows the handling of an "active" metadata item resident in the permanent memory 31 of the first device 3. Upon a "power up" state transition 11, an "active" copy of the metadata item is written to the volatile memory 32 with a location identifier "device 1". At the same time, a "passive" copy of the metadata item is written to any recording medium 1, 2 present in the device in case the metadata item does not yet exist on the specific recording medium 1, 2. Corresponding "passive" copies are written to the volatile device memory 32 with the respective location identifiers. Upon a "recording medium farewell" state transition 15 the respective copy of the "passive" metadata item in the volatile memory 32 is written back to the recording medium 1, 2 and removed from the volatile memory 32. Upon a "power down" state transition 16, the "active" copy of the metadata item in the volatile memory 32 is removed and written back to the permanent memory 31. The "passive" copy of the metadata item on the recording medium 1, 2 does not propagate to any other device the recording medium 1, 2 is inserted into.

The handling of an "active" metadata item resident on the first recording medium 1 is shown in Fig. 4d). The propagation scheme will be explained with reference to the first device 3 only. The scheme for the second device 4 is identical. Upon a "recording medium welcome" state transition 13 a "passive" copy of the metadata item is written to the volatile memory 32 with a location identifier "device 1" in case the metadata item does not yet exist in the device 3. At the same time an "active" copy of the metadata item with a location identifier "medium 1" is also written to the volatile memory 32. When a "recording medium farewell" state transition 15 occurs, the "active" copy of the metadata item in the volatile device memory 32 with the location identifier "medium 1" is written back to the recording medium 1 and removed from the volatile memory 32. When a "power down" state transition 16 occurs, the "passive" copy of the metadata item with the location identifier "device 1" is written to the permanent memory 31 and removed from the volatile memory 32. The "passive" copy of the metadata item does not propagate to any other recording medium 2.

Writing the copies of the metadata items back to their respective source locations ensures that all changes made to the metadata items inside the volatile device memories 32, 42 are preserved.

## Claims

1. Method for controlling the distribution of metadata items to recording media (1, 2) and/or to devices (3, 4) for reading from and/or writing to recording media, **characterized in that** it comprises the steps of:
providing the metadata items (5) with a propagation property (6), the propagation property (6) assuming a first or a second value,
automatically propagating copies of such metadata items (5), which have the first propagation property value, from a device (3, 4) to a recording medium (1, 2) and vice versa, if and only if they do not yet exist in the respective other location (1, 2, 3, 4), at least when the recording medium (1, 2) is inserted into or removed from the device (3, 4), or when the device (3, 4) is powered up or down.

2. Method according to claim 1, further comprising the step of changing the propagation property (6) of the propagated copies of the metadata items (5) to the second propagation property value.

3. Method according to either of claims 1 or 2, further comprising the step of
temporarily storing into a first memory (32, 42) of the device (3, 4) for reading from and/or writing to recording media all metadata items (5) accessible in a second memory (31, 41) of the device (3, 4) or reduced versions of these metadata items (5) at least when the device (3, 4) is powered up, and all metadata items (5) accessible on a recording medium (1, 2) or reduced versions of these metadata items (5) at least whenever such recording medium is inserted into the device (3, 4).

4. Method according to one of claims 1-3, further comprising the step of
retrieving additional metadata items (5) from a network and at least temporally storing the additional metadata items (5) or reduced versions thereof in the device (3, 4).

5. Method according to either of claims 3 or 4, further comprising the step of
adding a location identifier (8) to the metadata items (5) or reduced versions thereof upon storage, the location identifier (8) indicating to which storage location the propagation property (6) of a metadata item (5) or of a reduced version thereof applies.

6. Method according to any of claims 3-5, further comprising the step of
changing the propagation properties (6) of stored metadata items or reduced versions thereof.

7. Method according to any of claims 3-6, further comprising the steps of
writing back the metadata items (5), in accordance with the propagation property (6) and the location identifier (8), from the first memory (32, 42) of the device (3, 4) to a recording medium (1, 2) at least when the recording medium (1, 2) is removed from the device (3, 4), and/or
moving the metadata items (5) from the first memory (32, 42) of the device (3, 4) into the second memory (31, 41) of the device (3, 4) in accordance with the propagation property (6) and the location identifier (8) at least when the device (3, 4) is powered down.

8. Method according to claim 7, further comprising the step of
sending metadata items (5) stored in the device (3, 4) to a network.

9. Method according to either of claims 7 or 8, **characterized in that** the step of writing the metadata items (5) back to the recording medium (1, 2), the step of moving the metadata items (5) to the second memory (31, 41), and/or the step of sending metadata items (5) to the network comprise overwriting of metadata items (5) existing on the recording medium (1, 2), in the second memory (31, 41), and/or in the network, respectively.

10. Method according to any of the preceding claims, further comprising the step of providing the recording medium (1, 2), the device (3, 4) for reading from and/or writing to recording media, and/or the metadata items (5) or the reduced versions thereof with a protection property (7) for preventing the propagation and/or alteration of metadata items (5).

11. Method according to claim 10, **characterized in that** the protection property (7) provides for either a protection against export, against import, or against both export and import of the metadata items (5) or of reduced versions thereof from/to the recording medium (1, 2) and/or the device (3, 4) for reading from and/or writing to recording media.

12. Device (3, 4) for reading from and/or writing to recording media, **characterized in that** it comprises means for performing a method according to any of claims 1-11.

13. Recording medium (1, 2), **characterized in that** it comprises metadata items having a propagation property (6) for performing a method according to any of claims 1-11.

14. Data stream, **characterized in that** it comprises metadata items having a propagation property (6) for performing a method according to any of claims 1-11.
